# EUROPÄISCHE PATENTSCHRIFT

(11) **EP 0 543 111 B1**
(45) Veröffentlichungstag und Bekanntmachung des Hinweises auf die Patenterteilung: **18.10.1995**
(21) Anmeldenummer: 92116209.5
(22) Anmeldetag: 23.09.1992
(51) Int. Cl.: A47J 47/16, A47G 19/24, A47J 47/04, B65D 51/24

(54) **Gewürzbord**
Rack for condiment dispensers
Support pour distributeurs d'épices

(30) Priorität: 26.09.1991 DE 4132016; 27.03.1992 DE 4209949
(43) Veröffentlichungstag der Anmeldung: 26.05.1993
(73) Patentinhaber: LEIFHEIT Aktiengesellschaft, D-56377 Nassau (DE)
(72) Erfinder: Friedrich, Rainer, W-5408 Nassau/Lahn (DE); Schülein, Rolf Günter, W-5409 Singhofen (DE)

(56) Entgegenhaltungen:
- EP-A- 0 183 943
- DE-U- 8 104 395
- FR-A- 2 623 166
- GB-A- 932 918
- US-A- 4 569 462

## Beschreibung

Die Erfindung betrifft eine Einheit bestehend aus einem Halter und aus mehreren hängend angeordneten Gewürzbehältern nach dem Oberbegriff des Anspruchs 1 und einen für einen derartigen Halter bestimmten Gewürzbehälter.

Bei den üblichen Ausführungen ist der Verschlußkörper auf den Hals des Gewürzbehälters aufgeschraubt oder aufgesteckt. Bei Gewürzbehältern mit aufgeschraubtem Verschlußkörper ist die Handhabung durch die Notwendigkeit, den Verschlußkörper bei Gebrauch ab- und wiederaufschrauben zu müssen, umständlich. Aufgesteckte Verschlußkörper haben den Nachteil, daß sie nicht dicht schließen, was zu einem Aromaverlust führt.

Zur Halterung einer Mehrzahl von Gewürzbehältern ist es bekannt (DE-GM 81 04 395), ein ortsfest anbringbares Halteteil vorzusehen, das bei der bekannten Ausführung an seiner Unterseite mit Innengewinden versehen ist, in welche die ein entsprechendes Außengewinde aufweisenden Gewürzbehälter eingeschraubt werden.

In der EP-A-183943 ist beschrieben, daß Tuben und, aus dem in dieser EP zitieren Deutschen Gebrauchsmuster 72 27 485, auch Flaschen und dergleichen mittels eines Magnets verschlossen und gehalten werden können. Dazu muß aber auf die zu verschließende Tube, Flasche oder Dose ein durchbohrtes Halteteil oder dergleichen gesteckt bzw. geschraubt werden. Dieses zusätzlich vorzusehende und aufzuschraubende Teil wirkt dann mit einem Haltemagneten zusammen, der in einem Gehäuse angeordnet ist.

Durch das zusätzliche Vorsehen dieses Teils für die Haltevorrichtung verteuert sich der Gegenstand. Darüberhinaus wird auch die Außenkontur beispielsweise der Tube verändert. Die Tube wird also wohl nicht mit diesem Halteelement zusammen verkauft werden können, sondern das Halteelement wird als verlierbares Teil der Tube zugegeben werden müssen.

Die US-A-4569462 zeigt einen rechteckigen Container, der einseitig offen ist. Diese Öffnung wird mit einer Streuscheibe abgedeckt, die wiederum über ein Halteelement am Behälter gehalten wird. Dabei hat das Halteelement deckungsgleich eine Öffnung für die Öffnungen der Streuscheibe. Diese Gesamtkombination wird an einer magnetischen Platte gehalten und dadurch verschlossen.

Ausgehend von diesem Stand der Technik ist es die Aufgabe der Erfindung, eine Einheit bestehend aus einem Halter und aus mehreren hängend angeordneten Gewürzbbehältern mit Verschlußkappe zu schaffen, deren Handhabung gegenüber den bekannten Ausführungen wesentlich erleichtert ist und bei denen trotzdem ein dichter Verschluß erreicht wird.

Diese Aufgabe wird, ausgehend von einem gattungsgemäßen Halter für mehrere hängend angeordnete Gewürzbehälter, durch die kennzeichnenden Merkmale des Anspruchs 1 gelöst. Demnach sind die Gewürzbehälter in bzw. an den jeweiligen Verschlußkörpern durch magnetische Anziehungskraft gehalten, und die Gewürzbehälter weisen jeweils eine Streuscheibe oder eine Streuscheiben-Einfassung auf, die als ferromagnetisches Element ausgebildet sind und mit einem im Halter oder im Verschlußkörper integrierten Magneten zusammenwirken. Vorteilhafte Ausgestaltungen dieses Halters ergeben sich aus den Unteransprüchen 2 bis 7.

Der Halter ist dabei vorzugsweise von einer aus Kunststoff bestehenden Schiene gebildet, an deren Unterseite ein Magnetband oder ein ferromagnetisches Band angebracht ist, und die Gewürzbehälter sind entsprechend mit Elementen aus ferromagnetischem oder magnetischem Material versehen, die durch Magnetkraft an dem Band gehalten sind. Um das Ergreifen einzelner Gewürzbehälter zu erleichtern, kann das Band in Abständen mit Abstandshaltern für benachbarte Gewürzbehälter versehen sein. Dabei kann das Band in Abständen mit Durchbrüchen versehen sein, durch die sich an die Schiene angeformte Ansätze hindurcherstrecken, welche die Abstandshalter bilden. Diese Fortsätze können gegebenenfalls gleichzeitig zur Halterung der Verschlußkörper dienen. Eine weitere Erleichterung der Handhabung wird erreicht, wenn der in üblicher Weise zylindrische Gewürzbehälter in zwei diametral gegenüberliegenden Seiten mit Griffmulden versehen ist.

Bei der vorstehend beschriebenen Ausführung könnte es als Nachteil angesehen werden, daß der Gewürzbehälter nach Abnahme von dem Halter unverschlossen ist. Um diesen Bedenken zu begegnen, kann der Verschlußkörper in bekannter Weise lösbar an einem ortsfest anbringbaren Halteteil angebracht sein, wobei erfindungsgemäß dieses Halteteil als im Querschnitt etwa halbkreisförmige Schiene ausgebildet ist und der Verschlußkörper einen Haltebereich mit einer das Kalteteil hintergreifenden Leiste und einem federnden Haltenocken aufweist. Bei dieser Ausbildung kann der Gewürzbehälter mit aufgesetztem und durch Magnetkraft gehaltenem Verschlußkörper durch eine Schwenkbewegung leicht vom Halteteil abgenommen und somit verschlossen auf den Tisch gestellt werden.

Besondere Ausführungsformen von an den erfindungsgemäßen Halter angepaßten Gewürzbehältern ergeben sich aus den Ansprüchen 8 bis 13. Demnach kann mittels eines Kunststoffüberzugs über den Magneten bzw. die Streuscheibe die Reinigung dieser Teile vereinfacht werden.

Um ein "Kleben" des ferromagnetischen Elements an dem Magneten zu vermeiden, können Mittel zur Aufrechterhaltung eines engen Luftspalts zwischen diesen Teilen vorgesehen sein.

Der Magnet kann in einem Dichtring aus Weichplastik gehalten sein, der in den rohrförmigen Aufnahmeteil des Verschlußkörpers eingepreßt ist. Der den Rand des Magneten auf der dem ferromagnetischen Element zugewandten Seite umgreifende Rand des Dichtringes kann dabei durch die Anlage an dem ferromagnetischen Element den erwähnten Luftspalt sicherstellen und die Abdichtung zwischen dem Verschlußkörper und dem Gewürzbehälter verbessern.

Die Gewürzbehälter stehen durch einfaches Abziehen des Verschlußkörpers bzw. des Gewürzbehälters vom Verschlußkörper (falls dieser ortsfest angeordnet ist) zur Benutzung bereit, wobei eine ausreichende Abdichtung bei aufgesetztem Verschlußkörper durch die Magnetkraft erreicht wird, die zwischen dem Gewürzbehälter und dem Verschlußkörper wirkt.

Der Verschlußkörper kann ein rohrförmiges Aufnahmeteil für den Behälterhals aufweisen.

Die Erfindung wird im folgenden unter Bezugnahme auf die Zeichnungen beispielhaft erläutert. Es zeigt:
- Fig. 1: einen Schnitt durch eine Gesamtanordnung Halteteil-Verschlußkörper-Gewürzbehälter,
- Fig. 2: eine Alternativlösung in gleicher Darstellung wie Fig. 1,

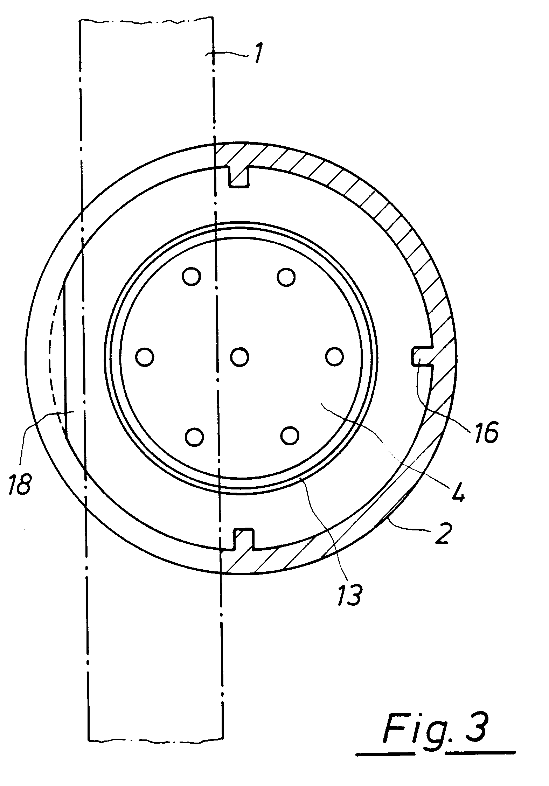

- Fig. 3: einen Schnitt gemäß Linie III-III in Fig. 1,
- Fig. 4: eine Ansicht eines Halters mit einer Mehrzahl von Gewürzbehältern, teilweise geschnitten,
- Fig. 5: eine Ansicht der Fig. 4 von unten,
- Fig. 6: einen Querschnitt eines Gewürzbehälters entlang Linie VI-VI in Fig. 4 und
- Fig. 7: einen Schnitt gemäß Linie VII-VII in Figur 4 in einer Alternativausführung mit Rundmagneten.

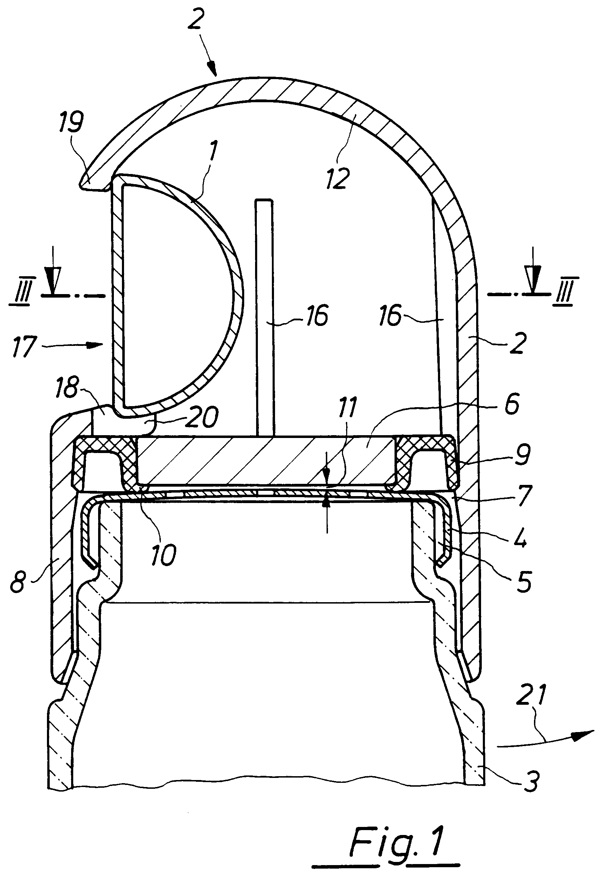

Es sei zunächt auf Fig. 1 bezuggenommen, in der ein Halteteil 1 in Form eines im Querschnitt halbkreisförmigen Rohres dargestellt ist, an dem ein Verschlußkörper 2 lösbar befestigt ist. Dieser Verschlußkörper nimmt einen abnehmbaren Gewürzbehälter 3 auf, der aus Glas, Kunststoff und dergl. besteht und dessen Hals 5 von einer Streuscheibe 4 abgedeckt ist. Die Streuscheibe 4 ist auf den Hals 5 aufgeschraubt oder aufgeklemmt und besteht aus einem ferromagnetischen Material.

Der Verschlußkörper 2 weist ein rohrförmiges Aufnahmeteil 8 für den Behälterhals 5 auf, das an seinem inneren Ende 7 mit einem Magneten 6 versehen ist, der mit der ferromagnetischen Streuscheibe 4 zusammenwirkt. Der Magnet 6 ist in einen Dichtring 9 aus Weichplastik eingebettet, der in das Aufnahmeteil 8 eingepreßt oder eingerastet ist. Der Dichtring 9 umgreift den Rand des Magneten 6 und bildet eine ringförmige Dichtlippe 10, die durch die Kraft des Magneten 6 auf die Streuscheibe gepreßt wird. Diese Dichtlippe definiert gleichzeitig einen engen Luftspalt 11 zwischen dem Magneten 6 und dessen Gegenpol, der Streuscheibe 4. Der Magnet 6 stützt sich an Stegen 16 ab.

Der Verschlußkörper 2 weist auf seiner dem Aufnahmeteil 8 gegenüberliegenden Seite ein haubenförmiges Teil 12 auf, in dem ein Haltebereich 17 zur lösbaren Anbringung des Verschlußkörpers 2 mit Gewürzgehälter 3 an dem Halteteil 1 vorgesehen ist. Der Haltebereich 17 wird durch eine von dem Halteteil 1 hintergriffene Leiste 18 und einen den Auslauf des haubenförmigen Teils 12 bildenden Haltenocken 19 begrenzt. Die Leiste 18 und der Haltenocken 19 sind zum Inneren des Verschlußkörpers 2 hin durch formschlüssig mit dem Halteteil 1 zusammenwirkende Auflagebereiche 20 vergrößert. Diese Auflagebereiche 20 gewährleisten eine spielfreie Befestigung der aus dem Verschlußkörper 2 und dem Gewürzbehälter 3 bestehenen Einheit am Halteteil 1. Zum Abnehmen vom Halteteil 1 wird diese Einheit in Richtung des Pfeiles 21 geschwenkt, wodurch der Verschlußkörper 2 von dem Halteteil 1 freikommt.

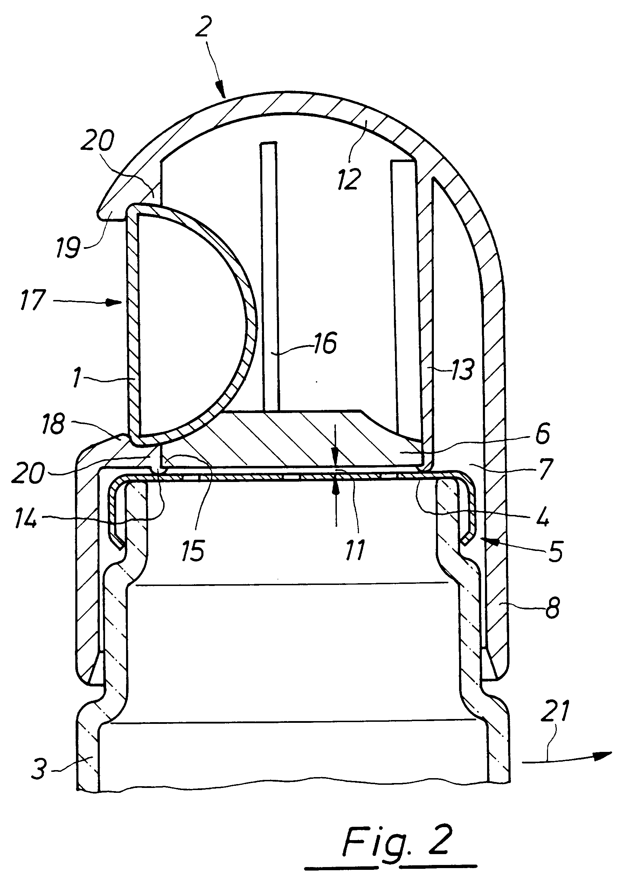

Bei der Abwandlung gemäß Fig. 2 ist der Magnet 6 von einem an dem Haubenteil 12 des Verschlußkörpers 2 angeformten Ring 13 gehalten, der in einer hinterschnittenen ringförmigen Dichtwulst 14 endet. Der Hinterschnitt 15 der Dichtwulst 14 definert wiederum den Luftspalt 11 zwischen dem Magneten 6 und der Streuscheibe 4. Bei dieser Ausführung hintergreift der Haltenocken 18 mit seinem Auflagenbereich 20 das Halteteil 1. Bei Schwenken der Einheit aus Verschlußkörper 2 und Gewürzbehälter 3 in Richtung des Pfeiles 21 weicht der Haltenocken 19 aufgrund seines Materials und seiner Wandstärke etwas zurück, wodurch der Verschlußkörper 2 mit dem Gewürzbehälter 3 von dem Halteteil 1 abgenommen werden kann.

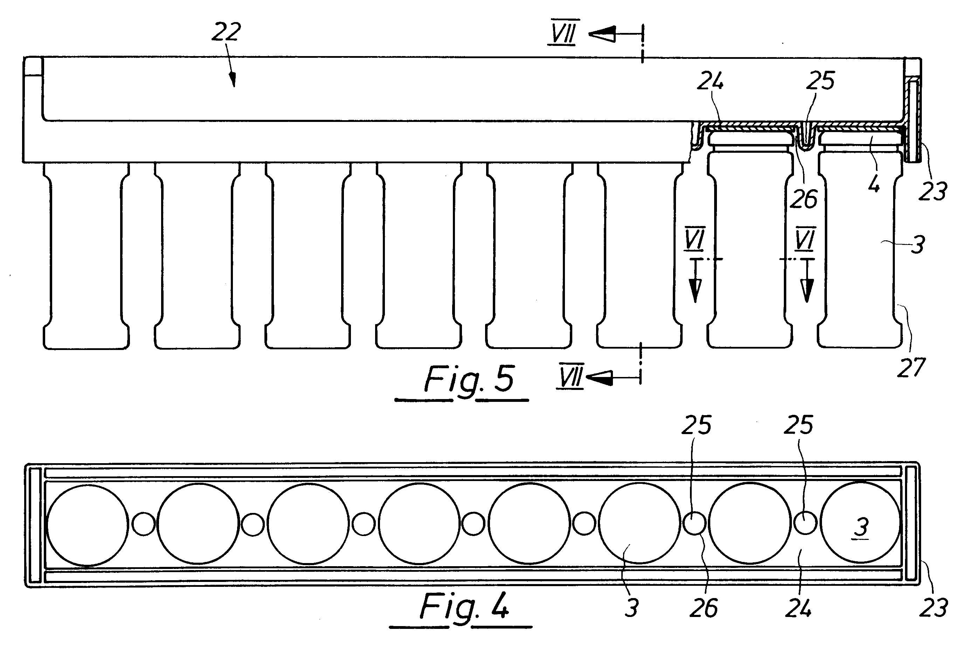

Es sein nun auf die Ausführung gemäß Fig. 4 und 5 bezuggenommen, in der ein Halter 22 für eine Mehrzahl von Gewürzbehältern 3 dargestellt ist. Der Halter 22 weist eine vorzugsweise aus Kunststoff bestehende Schiene 23 auf, die beispielsweise durch Klebebänder an einer Wand, einem Hängeschrank oder dergl. befestigt werden kann. Die Verschlußkörper der Gewürzbehälter 3 sind in diesem Fall in den Halter 22 integriert und von einem Magnetband 24 gebildet, das an der Unterseite der Schiene 23 angebracht ist. Die Gewürzbehälter 3 sind wie bei den vorhergehenden Ausführungsbeispielen durch eine Streuscheibe 4 aus ferromagnetischem Material verschlossen, und sie werden durch die auf die Streuscheiben wirkende magnetische Anziehungskraft des Magnetbandes 24 am Halter 22 gehalten. Um das Ergreifen einzelner Gewürzbehälter 3 zu erleichtern, sind zwischen benachbarten Gewürzbehältern Abstandshalter 25 vorgesehen, die im Ausführungsbeispiel von an die Schiene 23 angeformten Ansätzen gebildet sind, welche sich durch öffnungen 26 im Magnetband 24 hindurcherstrecken. Diese Ansätze können bei entsprechender Ausbildung gleichzeitig zur Halterung des Magnetbandes 24 dienen.

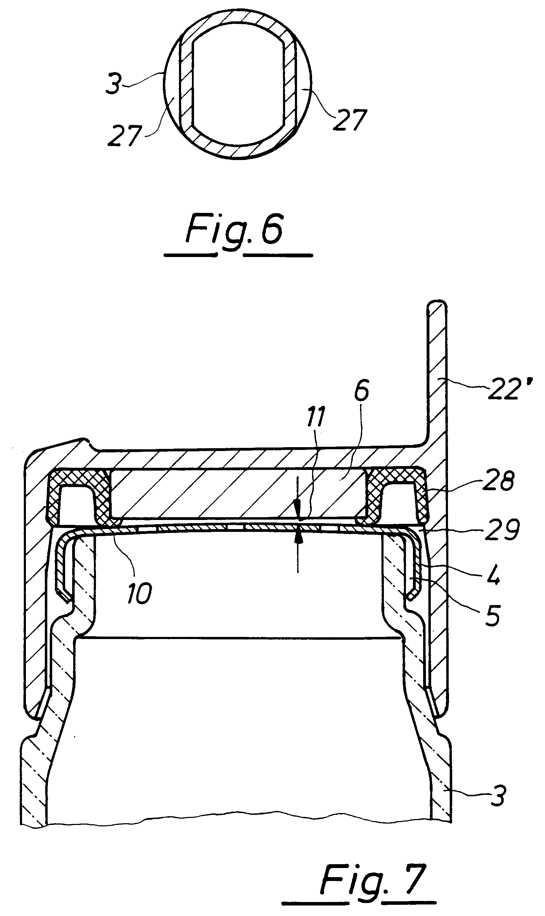

Um das Ergreifen der zylindrischen Gewürzbehälter 3 weiter zu erleichtern, sind diese an zwei diametral gegenüberliegenden Seiten mit Griffmulden 27 (Fig. 6) versehen. Dadurch lassen sich die Gewürzbehälter 3 sehr nahe nebeneinander am Halter 22 anordnen, ohne den Zugriff zu erschweren.

Bei allen Ausführungsbeispielen wurde angegeben, daß der Magnet 6 bzw. das Magnetband 24 im Verschlußkörper 2 bzw. im Halter 22 und das damit zusammenwirkende ferromagnetische Element 4 am Gewürzbehälter 3 angebracht. Natürlich läßt sich grundsätzlich auch die umgekehrte Anordnung verwirklichen. Auch kann als Gegenpol zu dem Magneten anstelle der Streuscheibe ein entsprechender Metallring um den Hals des Gewürzbehälters herumgelegt sein.

In dem Ausführungsbeispiel gemäß Figur 7 ist an Stelle des Magnetbandes (Figur 4 und 5) ein Dichtband 28 im Halter 22' befestigt. Das Dichtband 28 ist von unten in den Halter 22' eingesetzt und wird durch zwei Rastabsätze 29 gehalten. In das Dichtband 28 sind die Magnete 6, bevorzugt Rundmagnete, eingesetzt. Diese werden von einer der Magnetform angepaßten Dichtlippe 10, die durch die Kraft des Magneten auf die Streuscheibe gepreßt wird, gehalten. Analog zu dem Ausführungsbeispiel gemäß Figur 1 definiert die Dichtlippe 10 einen engen Luftspalt 11 zwischen dem Magneten 6 und dessen Gegenpol, der Streuscheibe 4.

## Patentansprüche

1. Halter Einheit bestehend aus einem Halter und aus mehreren hängend angeordneten Gewürzbehältern, die einen abnehmbaren Verschlußkörper aufweisen,
**dadurch gekennzeichnet**,
daß die Gewürzbehälter (3) in bzw. an den jeweiligen Verschlußkörpern (2 bzw. 24) durch magnetische Anziehungskraft gehalten sind und daß die Gewürzbehälter (3) jeweils eine Streuscheibe (4) oder eine Streuscheiben-Einfassung aufweisen, die als ferromagnetisches Element ausgebildet sind und mit einem im Kalter oder dem Verschlußkörper integrierten Magneten zusammenwirken.

2. Einheit nach Anspruch 1, dadurch gekennzeichnet, daß der Halter von einer Schiene (23) gebildet ist, an deren Unterseite ein die Verschlußkörper (24) bildendes Magnetband oder ein ferromagnetisches Band angebracht ist, und daß die Gewürzbehälter (3) entsprechend mit Elementen (4) aus ferromagnetischem oder magnetischem Material versehen sind, die durch Magnetkraft an dem Band gehalten sind.

3. Einheit nach Anspruch 1 oder 2, dadurch gekennzeichnet, daß der Halter in Abständen mit Abstandshaltern (25) für benachbarte Gewürzgläser (3) versehen ist.

4. Einheit nach Anspruch 3, dadurch gekennzeichnet, daß das Band (24) in Abständen mit Durchbrüchen (26) versehen ist, durch die sich an die Schienen (23) angeformte Ansätze hindurch erstrecken, welche die Abstandshalter (25) bilden.

5. Einheit nach Anspruch 4, dadurch gekennzeichnet, daß die Abstandshalter (25) gleichzeitig zur Halterung der Verschlußkörper (24) verwendet sind.

6. Einheit nach einem der Ansprüche 1 bis 5, dadurch gekennzeichnet, daß der Verschlußkörper (24) aus einem Dichtband (28) mit in dieses eingesetzten Magneten (6) besteht.

7. Einheit nach Anspruch 6, dadurch gekennzeichnet, daß die Magnete (6) als Rundmagnete ausgebildet sind.

8. Gewürzbehälter für eine Einheit nach einem der Ansprüche 1 bis 7, dadurch gekennzeichnet, daß der Magnet (6) und/oder die Streuscheibe (4) mit einem Kunststoffüberzug versehen sind.

9. Gewürzbehälter für eine Einheit nach einem der Ansprüche 1 bis 8, dadurch gekennzeichnet, daß Mittel (10; 14) zur Aufrechterhaltung eines engen Luftspaltes (11) zwischen dem Magneten (5) und dem ferromagnetischen Element (4) vorgesehen sind.

10. Gewürzbehälter für eine Einheit nach einem der Ansprüche 1 bis 8, dadurch gekennzeichnet, daß der Verschlußkörper (2) ein rohrförmiges Aufnahmeteil (8) für den Behälterhals (5) aufweist.

11. Gewürzbehälter für eine Einheit nach einem der Ansprüche 1 bis 8, dadurch gekennzeichnet, daß der Magnet (6) von einem Dichtring (9) aus Weichplastik gehalten ist, der in den rohrförmigen Aufnahmeteil (8) des Verschlußkörpers (2) eingepreßt ist.

12. Gewürzbehälter für eine Einheit nach einem der Ansprüche 1 bis 8, dadurch gekennzeichnet, daß der Verschlußkörper (12) lösbar an einem ortsfest anbringbaren Halteteil befestigt ist, daß das Halteteil (1) eine im Querschnitt etwa halbkreisförmige Schiene ist, und daß der Verschlußkörper (2) einen Haltebereich (17) mit einer das Halteteil (1) hintergreifenden Leiste (18) und einem federnden Haltenocken (19) aufweist.

13. Gewürzbehälter für eine Einheit nach einem der Ansprüche 1 bis 8, dadurch gekennzeichnet, daß er eine im wesentlichen zylindrische Form hat und an zwei diametral gegenüberliegenden Seiten mit Griffmulden (27) versehen ist.

## Claims

1. Unit comprising a holder and a plurality of hangmounted spice containers exhibiting a removable stopper body, characterized in that the spice containers (3) are held in or against the respective stopper bodies (2 and 24) by magnetic attraction and in that the spice containers (3) respectively exhibit a diffusing screen (4) or a diffusing screen enclosure, which are configured as a ferromagnetic element and interact with a magnet integrated within the holder or the stopper body.

2. Unit according to Claim 1, characterized in that the holder is formed by a rail (23), to the bottom side of which there is attached a magnetic band forming the stopper body (24), or a ferromagnetic band, and in that the spice containers (3) are correspondingly provided with elements (4) made from ferromagnetic or magnetic material, which are held by magnetic force against the band.

3. Unit according to Claim 1 or 2, characterized in that the holder is provided at intervals with spacers (25) for adjacent spice glasses (3).

4. Unit according to Claim 3, characterized in that the band (24) is provided at intervals with apertures (26), through which there extend protrusions formed onto the rails (23), the said protrusions forming the spacers (25).

5. Unit according to Claim 4, characterized in that the spacers (25) are simultaneously used to hold the stopper body (24).

6. Unit according to one of Claims 1 to 5, characterized in that the stopper body (24) comprises a sealing band (28) having magnets (6) inserted therein.

7. Unit according to Claim 6, characterized in that the magnets (6) are configured as round magnets.

8. Spice container for a unit according to one of Claims 1 to 7, characterized in that the magnet (6) and/or the diffusion screen (4) are provided with a plastic covering.

9. Spice container for a unit according to one of Claims 1 to 8, characterized in that means (10; 14) for maintaining a narrow air gap (11) between the magnet (5) and the ferromagnetic element (4) are provided.

10. Spice container for a unit according to one of Claims 1 to 8, characterized in that the stopper body (2) exhibits a tubular receiving part (8) for the container neck (5).

11. Spice container for a unit according to one of Claims 1 to 8, characterized in that the magnet (6) is held by a sealing ring (9) made from soft plastic, which sealing ring is pressed into the tubular receiving part (8) of the stopper body (2).

12. Spice container for a unit according to one of Claims 1 to 8, characterized in that the stopper body (12) is fastened detachably to a holding part which can be attached in positionally fixed arrangement, in that the holding part (1) is a rail of roughly semi-circular cross-section, and in that the stopper body (2) exhibits a holding region (17) containing a bar (18), which back-grips the holding part (1) from behind, and a resilient holding cam (19).

13. Spice container for a unit according to one of Claims 1 to 8, characterized in that it has a substantially cylindrical shape and is provided, on two diametrically opposing sides, with grip recesses (27).

## Revendications

1. Unité constituée par un support et plusieurs récipients à épices ou condiments disposés en suspension et qui comporte un élément d'obturation amovible,
caractérisée en ce que
les récipients à épices ou condiments (3) sont maintenus dans ou sur les éléments d'obturation respectifs (2 ou 24) par la force d'attraction magnétique et en ce que les récipients à condiments ou à épices (3) présentent respectivement un disque diffuseur (4) ou un châssis diffuseur qui sont constitués par un élément ferromagnétique et coopèrent avec un aimant intégré dans le support ou dans l'élément d'obturation.

2. Unité selon la revendication 1, caractérisée en ce que le support est constitué par un rail (23) sur le côté inférieur duquel est appliquée une bande magnétique ou une bande ferromagnétique formant l'élément d'obturation (24) et en ce que les récipients à épices ou condiments (3) sont dotés de façon correspondante d'éléments (4) en matériaux ferromagnétiques ou magnétiques qui sont maintenus sur la bande par la force magnétique.

3. Unité selon la revendication 1 ou 2, caractérisée en ce que le support comporte à certains intervalles des entretoises ou espaceurs (25) pour des pots en verre à condiments ou à épices contigus (3).

4. Unité selon la revendication 3, caractérisée en ce que la bande (24) est dotée de perforations (26) à certains intervalles, à travers lesquelles s'étendent les appendices formés sur les rails (23) et qui forment les entretoises ou espaceurs (25).

5. Unité selon la revendication 4, caractérisée en ce que les espaceurs (25) sont utilisés simultanément pour le maintien en place des éléments d'obturation (24).

6. Unité selon l'une des revendications 1 à 5, caractérisée en ce que l'élément d'obturation (24) est constitué par une bande d'étanchéité (8) incorporée dans l'aimant utilisé (6).

7. Unité selon la revendication 6, caractérisée en ce que les aimants (6) sont de configuration ronde.

8. Récipient à condiments ou à épices pour une unité selon l'une des revendications 1 à 7, caractérisé en ce que l'aimant (6) et/ou le disque diffuseur (4) sont munis d'un revêtement en matière plastique.

9. Récipient à condiments ou à épices pour une unité selon l'une des revendications 1 à 8, caractérisé en ce qu'il est prévu des moyens (10 ; 14) pour le maintien d'un entrefer étroit (11) entre l'aimant (5) et l'élément ferromagnétique (4).

10. Récipient à condiments ou à épices pour une unité selon l'une des revendications 1 à 8, caractérisé en ce que l'élément d'étanchéité (2) présente une partie de réception tubulaire (8) pour le goulot du récipient (5).

11. Récipient à condiments ou à épices pour une unité selon l'une des revendications 1 à 8, caractérisé en ce que l'aimant (6) est maintenu par un joint d'étanchéité (9) en plastique mou qui est enfoncé dans la partie de réception tubulaire (8) de l'élément d'obturation (2).

12. Récipient à condiments ou à épices pour une unité selon l'une des revendications 1 à 8, caractérisé en ce que l'élément d'obturation (12) est fixé de façon détachable sur une partie de retenue pouvant être appliquée à demeure, en ce que la partie de retenue (1) comporte un rail de section transversale sensiblement semi-circulaire et en ce que l'élément d'obturation (2) comporte une zone de maintien (17) avec un rebord (18) dans lequel s'engage la partie de retenue et une came de retenue élastique (19).

13. Récipient à condiments ou à épices pour une unité selon l'une des revendications 1 à 8, caractérisé en ce qu'il présente une forme essentiellement cylindrique et en ce qu'il est muni sur deux côtés diamétralement opposés d'évidements de préhension (27).
